Europäisches Patentamt

(19) **European Patent Office**

**Office européen des brevets**

(11) Numéro de publication: **0 025 731**
**B1**

(12) # FASCICULE DE BREVET EUROPEEN

(45) Date de publication du fascicule du brevet:
07.09.83

(51) Int. Cl.³: **G 06 F 13/00**

(21) Numéro de dépôt: **80401191.4**

(22) Date de dépôt: **13.08.80**

(54) Sélecteur de demandes asynchrones dans un système de traitement de l'information.

(30) Priorité: **12.09.79 FR 7922745**

(43) Date de publication de la demande:
**25.03.81 Bulletin 81/12**

(45) Mention de la délivrance du brevet:
**07.09.83 Bulletin 83/36**

(84) Etats contractants désignés:
**DE FR GB IT**

(56) Documents cités:
**FR-A-2 154 968**
**FR-A-2 349 916**
**FR-A-2 406 250**
**GB-A-1 269 301**
**US-A-3 997 872**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Girard, Paul, 94, avenue Gambetta, F-75020 Paris (FR)**

(74) Mandataire: **Doireau, Marc, CII-Honeywell Bull Division Propriété Industrielle 94, avenue Gambetta Boîte Postale 33, F-75960 Paris cedex 20 (FR)**

BUNDESDRUCKEREI BERLIN

## Sélecteur de demandes asynchrones dans un système de traitement de l'information

La présente invention concerne un sélecteur de demandes asynchrones applicable à certains sous ensembles des systèmes de traitement de l'information ou des dispositifs de télécommunications d'informations numériques. Elle est applicable de manière générale toutes les fois qu'il s'agit d'assurer le fonctionnement harmonisé d'organes asynchrones les uns par rapport aux autres, devant communiquer entre eux, et qui ne disposent pas d'horloge commune.

Un système de traitement de l'information est constitué par un ensemble d'organes affectés à des tâches spécifiques. L'unité centrale de traitement exécute des programmes travaillant sur des données, les unités d'échanges assurent la transmission des données entre les organes d'entrée-sortie du système et l'unité de mémorisation, qui, quant à elle, emmagasine les programmes et les données. Pour assurer une cohérence entre tous les éléments du système, un dialogue existe nécessairement entre les unités. Suivant la taille ou la puissance du système, des dialogues de types synchrones ou asynchrones peuvent être réalisés. Les dialogues asynchrones sont surtout réservés aux gros systèmes, ceci pour plusieurs raisons, notamment, soit que la distance entre deux unités est importante et impose des temps de transmission des signaux difficiles à contrôler, soit pour permettre des développements indépendants de ces unités étalées dans le temps et/ou en des lieux différents.

C'est pourquoi le fonctionnement interne de ces unités n'est pas réglé au rythme d'une horloge qui leur serait commune, au contraire, chaque unité travaille à sa propre cadence sans se soucier des cadences de travail des unités voisines. De plus, certaines d'entre elles peuvent aussi ne pas posséder d'horloge périodique permanente, c'est-à-dire ne pas disposer d'un mécanisme qui leur donne l'heure à cadence régulière, sans interruption. Ces dernières sont dites à commande asynchrone. Dans ce dernier cas, le dialogue entre différentes unités de ce type, c'est-à-dire l'échange entre elles des signaux d'information ou de commande ne peut s'amorcer qu'après le lancement synchronisé d'une horloge temporaire à chaque train d'échange de signaux.

Dans les dispositifs actuellement connus le lancement synchronisé est obtenu à l'aide de basculeurs ou de déclencheurs du type »Triggers de Schmidt« mais en général des aléas de fonctionnement existent avec un taux de défaillance non clairement déterminé. C'est notamment le cas lorsque l'organe à commande asynchrone (c'est-à-dire démuni d'horloge permanente) est susceptible d'être sollicité pour entrer en fonctionnement par deux ou plus de deux demandes de déclenchement, complètement asynchrones les unes par rapport aux autres. Des aléas de fonctionnement se produisent lorsque les demandes interviennent quasi simultanément.

La présente invention a pour but de pallier ces inconvénients à l'aide d'un sélecteur de demande asynchrone assurant, malgré l'asynchronisme des différentes demandes de déclenchement, un démarrage sans aléa de fonctionnement de l'organe à commande asynchrone, avec un taux de succès prévisible à l'avance. Pour atteindre cet objectif, le sélecteur de demandes asynchrones de l'invention est à même de sélectionner les demandes asynchrones qui lui sont présentées en se déclenchant sur la ou les premières demandes qui le sollicitent simultanément ou quasi simultanément et en restant insensible aux autres demandes qui se présentent ultérieurement. Après l'exécution d'un cycle de fonctionnement, le sélecteur de demande asynchrone reprend un état repos jusqu'aux prochains lancements provoqués par de nouvelles demandes de déclenchement. Plus particulièrement le sélecteur de demandes asynchrones selon l'invention comprend un premier sélecteur temporel pour sélectionner les demandes selon leur instant de présentation, un deuxième sélecteur spatial pour prendre en compte les demandes sélectionnées par le sélecteur temporel et une horloge temporaire délivrant les signaux de synchronisation desdits premier deuxième sélecteurs, le dit sélecteur temporel comprenant, un premier moyen d'initialisation du sélecteur de demandes asynchrones pour le placer dans un état propre à recevoir et retransmettre une première demande, un deuxième moyen d'aiguillage de la dite demande vers l'entrée d'un dispositif de mémorisation, un troisième moyen de transmission de la dite demande à l'entrée de la dite horloge temporaire, la dite horloge temporaire délivrant un premier et un deuxième signal de commande sur ses sorties décalés dans le temps pour commander la mémorisation de la demande à l'intérieur du dispositif de mémorisation sélectionné et un troisième signal sur sa sortie pour placer le moyen d'initialisation dans un état propre à interdire toute réception et retransmission de nouvelles demandes asynchrones, caractérisé en ce que le dispositif de mémorisation comprend une première et une deuxième mémoire commandées respectivement par les dits premier et deuxième signaux de commande émis par la dite horloge temporaire de façon qu'une demande mémorisée dans la première mémoire puisse être transférée dans la deuxième mémoire.

Comme avantage, cette disposition permet notamment de résoudre le problème posé par l'apparition d'une première demande suivie d'une demande ultérieure lui succédant immédiatement puisque dans ce cas il y a un risque de ne pas satisfaire le temps de préparation du premier étage de mémorisation. Dans ces

2

onditions, l'état du premier étage de mémorisation ne peut pas être instantanément déterminé, par contre, l'inventeur a remarqué qu'il pouvait être connu au bout d'un instant bien déterminé, qui dépend du temps d'incertitude $t_i$ calculé à partir du temps qui sépare deux initialisations successives du sélecteur de demandes asynchrones et de la durée pendant laquelle l'utilisateur admet une probabilité d'un cycle entaché d'aléas.

C'est pourquoi le dispositif de mémorisation selon l'invention est composé d'une deuxième mémoire qui recopie l'état de la première à un instant bien déterminé après l'instant de commande de la première mémoire de façon à ce que la recopie de l'état d'une deuxième demande arrivant presque simultanément avec la première demande puisse se faire sans aléas.

La description sera mieux comprise à l'aide de la description faite au regard des dessings qui vont suivre.

La figure 1 représente sous la forme d'un schéma de principe l'organisation du sélecteur de demande asynchrone selon l'invention.

Les figures 2 et 3 sont des représentations plus détaillées du sélecteur de demandes asynchrones selon l'invention.

Les figures 4 et 5 représentent chacune une courbe schématisant le temps d'incertitude de basculement des basculeurs en fonction du temps de stabilisation de ces basculeurs.

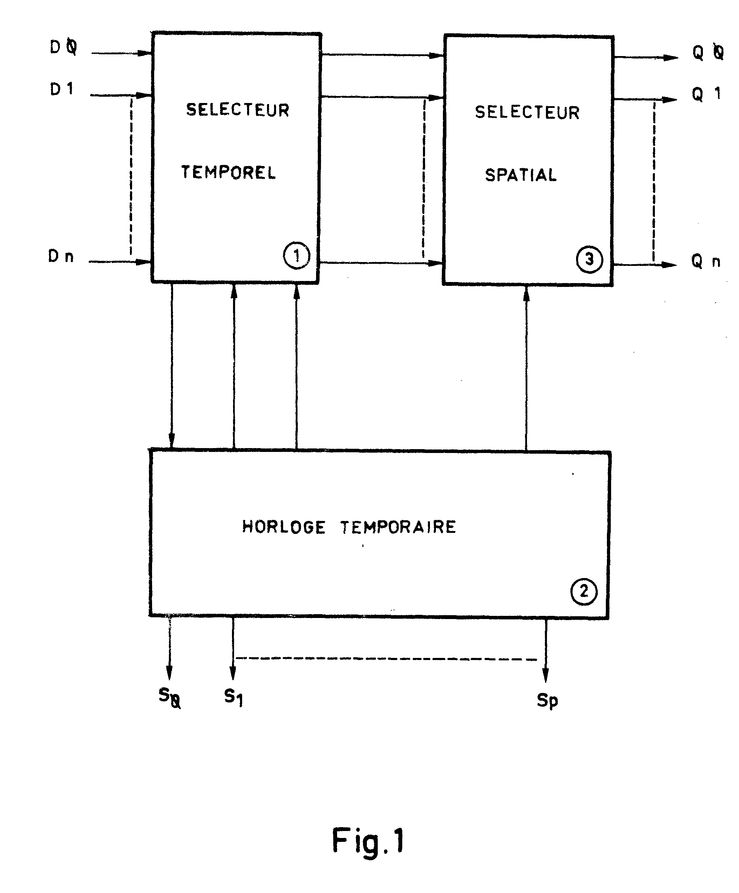

Le sélecteur de demandes asynchrones de la figure 1 se compose d'un sélecteur temporel (1), d'une horloge temporaire (2) et d'un sélecteur spatial (3). Introduit dans un système de traitement de l'information le sélecteur peut entrer dans la constitution d'un organe de ressource commune à plusieurs processeurs.

Ces processeurs effectuent, chacun pour leur propre compte et indépendamment les uns des autres, dans le temps, des demandes D0, D1 ... Dn pour utiliser le sélecteur de demandes asynchrones qui leur est commun. Le sélecteur temporel (1) reçoit ces demandes d'utilisation asynchrones D0, D1 ... Dn et effectue une première sélection de ces demandes selon leur instant de présentation, il déclenche l'horloge temporaire (2) et communique le résultat de sa présélection au sélecteur spatial (3). L'horloge temporaire (2) délivre des signaux de synchronisation S0, S1 ... Sp répartis dans le temps, utilisables par l'organe de ressource commune et par les deux sélecteurs temporel et spatial. Le sélecteur spatial (3) reçoit les demandes présélectionnées par le sélecteur temporel. Le sélecteur spatial peut garder en mémoire plusieurs demandes en instance qui seront à leur tour sélectionnées suivant un critère d'arbitrage choisi à l'avance. Il peut s'agir par exemple, d'un critère de priorité dans un ordre prédéterminé ou variable ou d'une stratégie de prise en compte séquentielle des demandes présélectionnées. Le choix du type de sélecteur spatial ne limite pas le principe de l'invention. Les signaux Q0, Q1 ... Qn issus du sélecteur spatial traduisent sous forme binaire le résultat définitif de la sélection et sont utilisés sous forme de commande pour la mise en œuvre de l'organe de ressource commune.

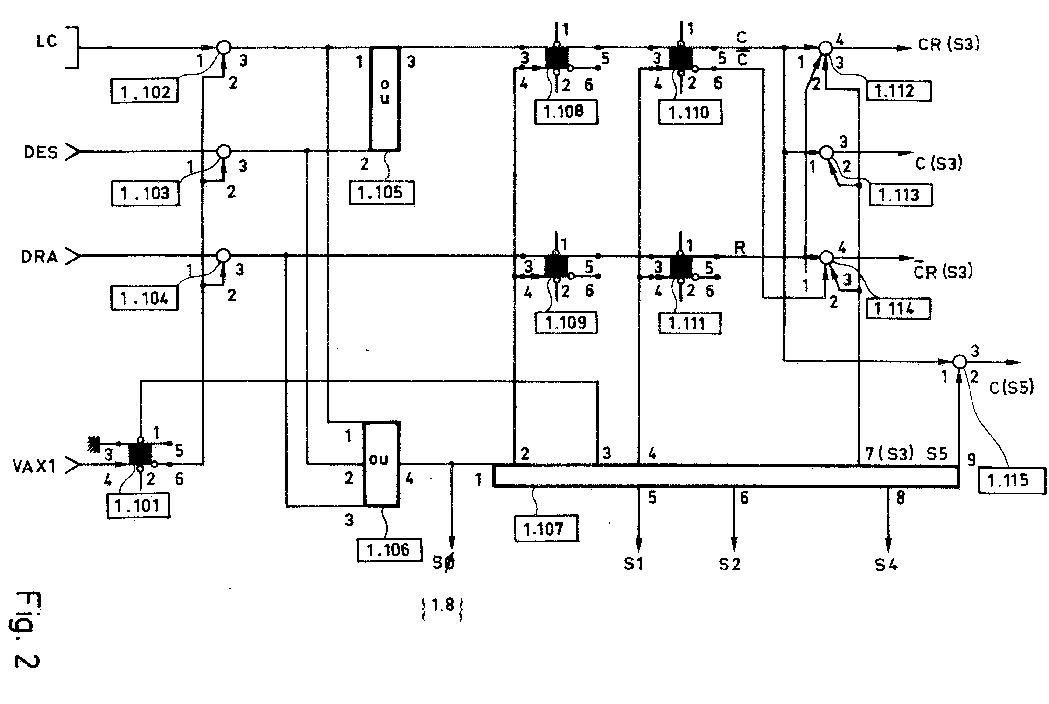

La figure 2 représente de façon détaillée une réalisation du sélecteur lanceur selon l'invention. Pour clarifier l'exposé, nous supposerons que le sélecteur lanceur de la figure 2 rentre dans la composition d'un organe de ressource commune qui est un banc de mémoire réalisé en technologie MOS (abréviation du terme anglo-saxon »Metal Oxyde Semiconducteur«) sollicité par deux demandes d'utilisation: l'une matérialisée par les signaux DC ou DES postule à l'exécution dans le banc de mémoire d'un cycle utile (lecture ou écriture d'une information), l'autre, concrétisée par le signal DRA demande l'exécution dans ce même banc de mémoire d'un cycle de rafraîchissement apparent. Les séquences nécessaires pour effectuer les opérations d'écriture de lecture ou de rafraîchissement sont bien connues de l'homme de l'art, leur description n'est pas nécessaire pour la mise en œuvre de l'invention; leur description peut être trouvée dans le livre intitulé »Structure et commande des ordinateurs« Chapitre IV page 101 à 114 de Jean Pierre Meinadier édité chez Larousse — ou le livre intitulé »Les microprocesseurs de Rodnay Zaks et Pierre Le Beux édité par Sybex — 313, rue Lecourbe 75015 PARIS.

Les signaux DC, DES et DRA sont appliqués respectivement sur l'entrée 1 des circuits ET notés 1.102, 1.103 et 1.104 de la figure 2.

L'entrée 2 de chacun de ces circuits ET reçoit un signal de validation provenant de la sortie 6 du basculeur 1.101 lorsqu'une transition positive est appliquée sur l'entrée 4 de ce basculeur. Cette transition positive est le front avant d'une impulsion désignée sous le nom VAX1.

Les circuits ET 1.102 et 1.103 attaquent à partir de leur sortie 3 les entrées 1 et 2 du circuit logique OU 1.105.

Celui-ci est relié par sa sortie 3 à l'entrée 3 du basculeur 1.108. Ce dernier est monté en cascade avec un second basculeur 1.110, c'est-à-dire en reliant sa sortie 5 sur l'entrée 3 de ce second basculeur.

En parallèle, la sortie 3 du circuit ET 1.104 attaque l'entrée 3 du basculeur 1.109, lui-même monté également en cascade avec le circuit 1.111.

En outre, les circuits ET de validation des demandes 1.102, 1.103 et 1.104 sont reliés par leur sortie 3 aux entrées respectives 1, 2 et 3 du circuit logique OU 1.106. Ce dernier délivre sur sa sortie 4 le signal S0. Il attaque aussi une ligne à retard 1.107. Cette dernière synchronise les basculeurs 1.108 et 1.109 sur leur entrée d'horloge 4 à partir de sa sortie calibrée 2; elle synchronise également les basculeurs 1.110 et 1.111 à partir de sa sortie calibrée 4. Elle remet à zéro la sortie 6 du basculeur 1.101 en appliquant l'impulsion issue de sa sortie 3 sur l'entrée 1 de ce basculeur. Elle fournit en outre, divers signaux retardés de manière calibrée S1, S2, S3, S4 et S5 sur ses sorties respectives 5, 6, 7, 8 et 9.

Si l'on désigne par C et $\bar{C}$ respectivement les sorties 5 et 6 du basculeur 1.110 et R la sortie 5 du basculeur 1.111, il apparaît sur la figure 2 que les circuits logiques ET 1.112, 1.113 et 1.114 réalisent dans le même ordre les fonctions logiques ET suivantes de ces différents signaux : CR (S3) sur la sortie 4 du circuit ET 1.112 recevant C en entrée 1, R en entrée 2 et S3 en entrée 3, C(S3) sur la sortie 3 du circuit ET 1.113 recevant C en entrée 1 et S3 en entrée 2 et enfin $\bar{C}$R(S3) sur la sortie 4 du circuit ET 1.114 recevant R en entrée 1, $\bar{C}$ en entrée 2 et S3 en entrée 3. Le circuit logique ET 1.115 délivre la fonction C(S5) sur sa sortie 3 à partir des signaux C sur son entrée 1 et S5 sur son entrée 2.

De ce qui précède et en reprenant la terminologie utilisée à la figure 1, le sélecteur temporel est constitué des éléments 1.101 à 1.111 en exceptant la ligne à retard 1.107 qui constitue l'horloge temporaire. Le sélecteur spatial est constitué des trois circuits ET 1.112 à 1.114.

Le fonctionnement du sélecteur de commande asynchrone représenté à la figure 2 est le suivant:

Au moyen d'une impulsion sur son entrée continue 2 ou du signal VAX1 sur son entrée d'horloge 4, le basculeur 1.101 a été initialisé ou réinitialisé dans l'état logique vrai sur sa sortie 6. Les signaux de demandes DC, DES ou DRA sont donc transmis, à travers les outils logiques ET 1.102, 1.103 et 1.104 directement, d'une part, aux entrées 1 et 2 de l'outil OU 1.105 pour DC ou DES ainsi qu'à l'entrée de donnée 3 du basculeur 1.109 pour DRA, et d'autre part, aux entrées 1, 2 et 3 de l'outil OU 1.106. Les demandes de cycle utile DC ou DES sont rassemblées sur l'outil OU 1.105 qui présente cette demande de cycle utile sur l'entrée 3 du basculeur 1.108. Par conséquent, l'entrée de donnée 3 des basculeurs 1.108 ou 1.109 reçoit un signal à la valeur logique vraie. La transition montante de ce signal est retardée du temps de traversée des outils logiques intermédiaires par rapport à la transition montante des signaux de demande à l'entrée du sélecteur temporel. Ces mêmes signaux de demande produisent à la sortie 4 de l'outil OU 1.106 un signal d'attaque de l'horloge temporaire constituée par la ligne à retard 1.107.

Le signal de lancement de la ligne à retard est restitué à la sortie 2 de cette ligne au bout d'un temps calibré de la manière suivante. On appelle »temps de préparation« le temps qui s'écoule entre premièrement l'apparition du signal se présentant sur une entrée de donnée 3 d'un basculeur comme 1.108 ou 1.109 et deuxièmement la transition montante du signal de commande attaquant l'entrée d'horloge 4 de ce même basculeur. Une valeur minimale de ce temps de préparation doit être garantie. Cette valeur dépend de la technologie du basculeur considéré. Le retard entre l'entrée 1 et la sortie 2 de la ligne à retard est donc calculé pour assurer cette valeur minimale dans le cas le plus défavorable. Le calcul est le suivant: le temps de retard calibré doit être supérieur ou égal à la différence entre d'une part le temps maximal de traversé de la chaîne logique délivrant le signal de donnée et constituée ici d'une porte OU auquel s'ajoute le temps minimal de préparation du basculeur et d'autre part, le temps minimal de traversée de la chaîne logique produisant l'impulsion d'horloge et comportant ici une porte OU. Les chaînes logiques en concurrence sont déterminées en remontant à partir de l'origine des contraintes jusqu'à leur point commun. Tout ce qui précède s'applique à la première des demandes de cycle qui se présente, DC (respectivement DES) pour un cycle utile ou DRA pour un cycle de rafraîchissement. Nous analysons plus loin le cas où une première demande, soit pour un cycle utile, soit pour un cycle de rafraîchissement ayant eu lieu, il apparaît immédiatement après, une demande pour l'autre type de cycle.

Dans l'hypothèse présente, le basculeur 1.108 ou 1.109 sur lequel aboutit la demande la plus précore prend alors la valeur logique vraie sans aucun aléa de fonctionnement puisqu'il est mis en œuvre conformément à ses règles technologiques d'utilisation. Cette valeur est recopiée dans le second basculeur correspondant 1.110 ou 1.111 qui lui succède sur déclenchement dû à l'impulsion de synchronisation issue de la sortie 4 de la ligne à retard 1.107. Les basculeurs 1.110 et 1.111 constituent l'étage de sortie du sélecteur temporel.

L'un d'entre eux au moins est au travail, c'est-à-dire présente une valeur logique vraie sur sa sortie 5, à l'issue de cette première phase de fonctionnement du sélecteur de demandes asynchrones.

Examinons maintenant le cas où les demandes DC, DES ou DRA étant par hypothèse totalement asynchrones, l'apparition d'une première demande (par exemple DC) est suivie d'une demande ultérieure (par exemple DRA) lui succèdant immédiatement. Dans ce cas, l'impulsion d'attaque de la ligne à retard 1.107 ayant été formée par la demande la plus précoce, il apparaît un risque de ne pas satisfaire le temps de préparation sur le basculeur relatif à la demande immédiatement ultérieure (1.109 dans l'exemple choisi). Si cette éventualité se produit, l'état de sortie de ce basculeur n'est pas alors instantanément déterminé. Il y aura lieu d'attendre pendant un temps déterminé avant d'enregistrer l'état dans le basculeur du second étage de sélecteur (1.111 dans l'exemple choisi). Il est à noter que la plage d'incertitude sur l'entrée de donnée du basculeur est au plus égale à la somme des »temps de préparation et de maintien« de ce basculeur, somme qui est de l'ordre de quelques nanosecondes dans les technologies modernes. Par ailleurs, dans ce montage selon l'invention, ce temps d'attente est bien déterminé, suivant la méthode qui sera exposée par la suite pour donner une probabilité d'incertitude en sortie de basculeur inférieure à une valeur donnée et partant pour garantir un temps connu de fonctionnement sans aléa. Il

ıffit alors de choisir ce temps assez grand pour ـıe le dispositif puisse être à l'utilisation considéré comme pratiquement exempt de toute défaillance.

Ainsi, dans tous les cas, le second étage de basculeurs, étage de sortie du sélecteur temporel, présente, à l'issue de cette première phase de sélection, des états stables dont l'un au moins est un état de travail. Les demandes d'utilisation asynchrones à l'entrée ont donc été à ce niveau resynchronisées.

L'horloge temporaire est réalisée sous forme de la ligne à retard 1.107 qui délivre successivement les temps calibrés S0, S1, S2, S3, S4 et S5. Après chaque cycle, l'impulsion qui parcourt cette ligne à retard disparaît. L'horloge temporaire se trouve ainsi mise automatiquement au repos jusqu'au prochain lancement de cycle. La sortie 3 de la ligne à retard 1.107 délivre l'impulsion de remise à zéro de la sortie 6 du basculeur 1.101. Ceci a pour effet d'une part de calibrer l'impulsion d'horloge et d'autre part de bloquer par mise à zéro des entrées 2 des portes ET 1.102 à 1.104 toute demande sur le sélecteur temporel et ceci pendant toute la durée du cycle. Les demandes éventuelles restent alors en attente à l'entrée du sélecteur temporel jusqu'à la fin de cycle. Ceci est mis à profit comme nous le verrons plus loin pour augmenter la sécurité de fonctionnement du sélecteur temporel.

Le sélecteur spatial est constitué par les trois circuits logiques ET 1.112 à 1.114. Ces circuits ET combinent les valeurs de sortie du sélecteur temporel pour former les signaux de commande $CR(S3)$, $C(S3)$ et $\overline{CR}(S3)$. Ces signaux de commande permettent de déclencher à un instant bien déterminé, grâce à l'impulsion de cynchronisation S3 issue de l'horloge temporaire, les actions qui ont été définies dans une stratégie de prise en compte séquentielle des demandes.

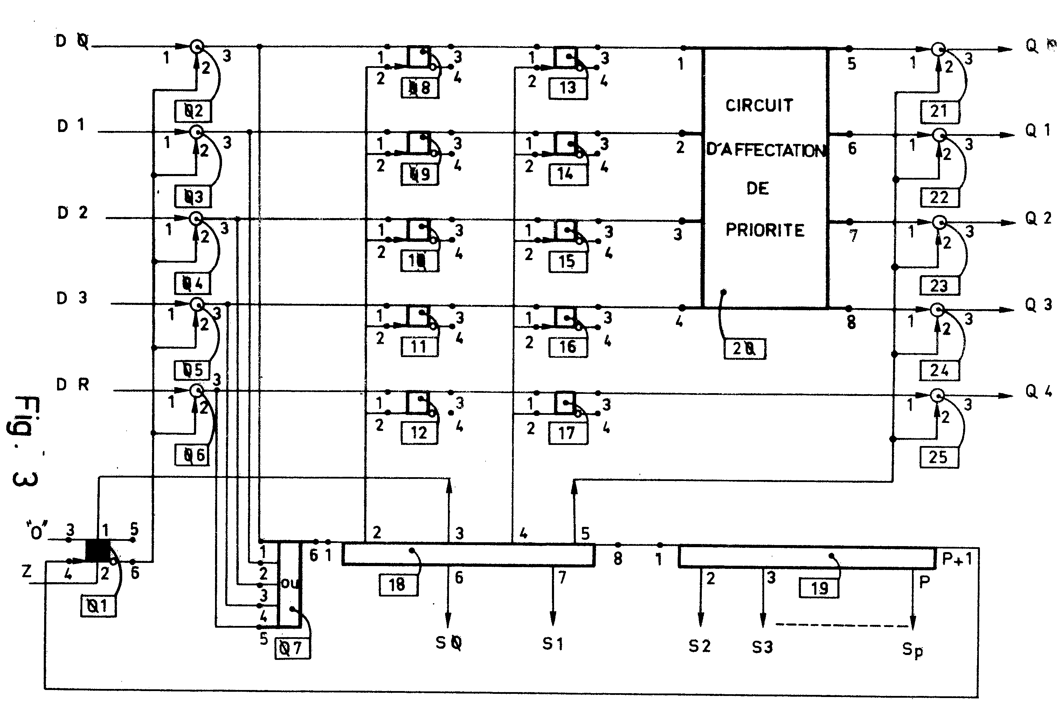

La figure 3 montre un second mode de réalisation préféré de l'invention qui est une généralisation du premier. Le nombre des demandes d'utilisation est étendu de deux à cinq. Les principes de l'invention sont d'ailleurs indépendants de ce nombre des demandes.

On retrouvera sur la figure 3, les trois sous-ensembles définis précédemment: le sélecteur temporel, l'horloge temporaire et le sélecteur spatial.

Le sélecteur temporel reçoit les demandes d'utilisation D0, D1, D2, D3 et DR sur les entrées 1 des outils logiques ET 02 à 06. Ces outils sont validés sur leur entrée 2 par le signal issu de la sortie 6 du basculeur 01. Ce basculeur a été précédemment initialisé à la valeur »un« sur sa sortie 6 par le signal Z sur son entrée 2 ou réinitialisé à la même valeur par une impulsion sur son entrée d'horloge 4. Les demandes validées sont alors transmises à partir des sorties 3 des circuits ET 02 à 06 sur les entrées de donnée 1 des basculeurs 08 à 12. En parallèle, elles sont rassemblées sur l'outil logique OU 07 pour attaquer, sur l'entrée 1, la ligne à retard 18 qui délivre, sur sa sortie 2, le signal de synchronisation excitant l'entrée d'horloge 2 des basculeurs 08 à 12. Le retard calibré de la sortie 2 de la ligne 18 est calculé pour assurer le temps de préparation de la demande la plus précoce sur les basculeurs 08 à 12. Les seconds étages de basculeurs 13 à 17 reçoivent sur leur entrée de donnée 1 les signaux issus des sorties 3 du premier étage de basculeurs 08 à 12. La synchronisation sur les entrées d'horloge 2 de ces seconds basculeurs est issue de la sortie 4 de la ligne à retard 18. Cette dernière synchronisation est déterminée, conformément à ce qui sera développé plus loin pour la détermination du temps de stabilisation, pour assurer une prise en compte dégagée d'aléas de fonctionnement. Les demandes d'utilisation se trouvent ainsi resynchronisées entre elles à la sortie 3 des basculeurs 13 à 17 qui présentent alors des signaux stables dont l'un au moins est au travail.

L'horloge temporaire apparaît ici constituée des lignes à retard 18 et 19. Elle met à la disposition de l'organe-ressource commune les signaux de synchronisation calibrés S0, S1, S2, S3 ... Sp issus des sorties 6, 7 de la ligne 18 et des sorties 2, 3 ... p de la ligne 19. Elle remet à zéro la validation d'entrée du sélecteur temporel fournie par la sortie 6 du basculeur 01 en délivrant sur sa sortie 3 une impulsion aiguillée sur l'entrée continue 1 du basculeur 01. En fin de cycle, elle réinitialise la validation d'entrée du sélecteur temporel par l'impulsion issue de sa ·sortie p+1 pour attaquer l'entrée d'horloge 4 du basculeur 01.

Le sélecteur spatial est ici d'un type de stratégie mixte: les demandes D0 à D3 sont sélectionnées suivant une priorité fixe alors que la demande DR est traitée suivant une procédure séquentielle. Les demandes présélectionnées et resynchronisées issues du sélecteur temporel sur la sortie 3 des basculeurs 13 à 16 se présentent sur les entrées 1 à 4 du circuit d'affectation de priorité 20 du sélecteur spatial. Une seule demande est élue en sortie 5, 6, 7 ou 8 de ce circuit 20 suivant une priorité fixe décroissante.

Les demandes non sélectionnées se maintiennent en entrée du sélecteur temporel jusqu'à leur prise en compte dont elles sont averties par le signal de sortie correspondant Q0, Q1, Q2 ou Q3 du sélecteur spatial. Les signaux de sortie Q0 à Q3 du sélecteur spatial ainsi que le signal de sortie QR, sont validés au moyen des outils logiques ET 21 à 25. Ces derniers reçoivent en effet les demandes sélectionnées sur leur entrée 1 et une impulsion de synchronisation issue de la sortie 5 de la ligne 18 sur leur entrée 2. Ils produisent sur leur sortie 3 les signaux de sortie du sélecteur spatial Q0, Q1, Q2, Q3 et Q4.

On a vu qu'un risque existait de ne pas satisfaire le temps de préparation sur le premier étage de basculeurs du sélecteur temporel. Ce risque apparaît lorsqu'une demande en provenance d'un organe utilisateur donné est immédiatement suivie à très brève échéance d'une demande issue d'un autre organe utilisateur. Dans ce cas, la sortie du basculeur recevant cette seconde demande atteint son état stable au bout d'un temps de stabilisation différent du temps de propagation spécifié lorsque le temps de préparation est garanti. Il est donc nécessaire de déterminer ce »temps de stabilisation« de façon à garantir un fonctionnement sans aléa pendant une durée minimale probable fixée à l'avance. Il suffit de prévoir cette durée suffisamment grande pour qu'en pratique le risque d'aléa de fonctionnement soit quasi nul. Le temps de stabilisation ainsi déterminé servira à la détermination du point de sortie 4 des lignes à retard 1.107 et 18 des figures 2 et 3; il correspondra en effet au temps de propagation du signal S0 entre les points 2 et 4 de ces lignes. Rappelons que les demandes d'utilisation sont admises dans le sélecteur temporel sur validation périodique d'un basculeur. Il s'agit par exemple du basculeur 1.101 de la figure 2 ou du basculeur 01 de la figure 3. Cette validation se reproduit périodiquement au bout d'un temps T dit »temps de cycle« que l'on peut exprimer en nanosecondes. Ce temps de cycle est par exemple fixé dans le second mode de réalisation (figure 3) par le retard calibré auquel est soumise l'impulsion issue de la sortie $p+1$ de la ligne à retard 19. L'apparition d'un phénomène de non-respect du temps de préparation ne peut donc se produire que toutes les T nanosecondes. Considérons par ailleurs la définition suivante: on appelle »temps d'incertitude« noté $t_i$, le produit du temps 0 d'échantillonnage du signal de donnée à partir de l'instant limite où il aurait dû se produire au plus tard pour satisfaire le temps de préparation par la probabilité $p_m$ de non-stabilisation du basculeur considéré. Au pire, les évènements d'apparition d'une non-stabilisation sont équiprobables pendant la durée du temps de cycle T. La probabilité p d'apparition d'un aléa est par suite égale à:

$$p = \frac{0\, p_m}{T} = \frac{T_i}{T}. \tag{1}$$

C'est aussi la probabilité d'apparition d'un cycle avec aléa parmi N cycles, soit:

$$p = \frac{1}{N} = \frac{1}{D/T} = \frac{T}{D}. \tag{2}$$

D étant la durée pendant laquelle on admet une probabilité d'un seul cycle entaché d'aléa. En égalant les relations (1) et (2), il vient:

$$\frac{t_i}{T} = \frac{T}{D} \text{ soit } t_i = \frac{T^2}{D}.$$

Le temps de cycle T propre à l'organe de ressource commune est connu; il suffit de se donner la durée D pour obtenir le temps d'incertitude $t_i$. On exprime tous ces temps en nanosecondes.

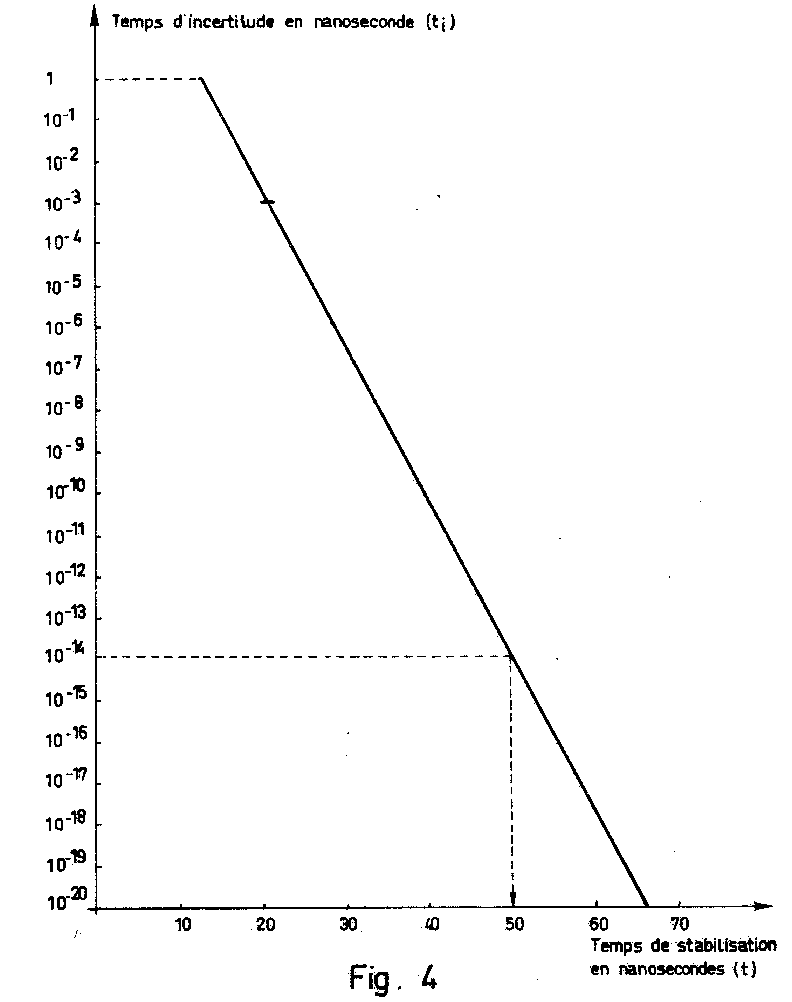

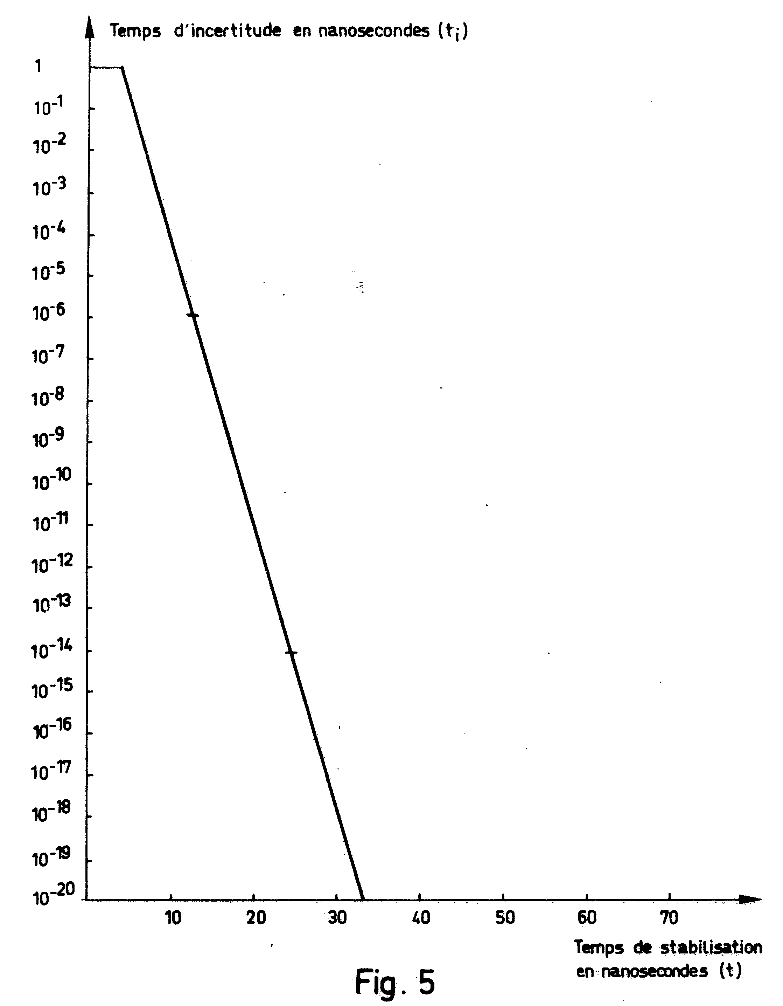

Par ailleurs, pour chaque type de basculeur utilisé, la probabilité $p_m$ d'une non-stabilisation et par suite le temps d'incertitude $t_i$ dépendent du »temps de stabilisation« au bout duquel la sortie du basculeur est effectivement utilisée. Cette probabilité a été mesurée en fonction du temps de stabilisation et il a aussi été établi les courbes donnant le temps d'incertitude en fonction du temps de stabilisation. Les figures 4 et 5 donnent une représentation de telles courbes pour des basculeurs du type SN 74S74 et 10141.

En portant en ordonnée sur de telles abaques, la valeur du temps d'incertitude calculée plus haut en fonction de la durée probable sand aléa, on obtient ainsi en abscisse la valeur t du temps de stabilisation à calibrer pour satisfaire les conditions fixées.

Les montages proposés présentent en outre une propriété autostabilisatrice. En effet, pendant toute la période de temps pendant laquelle le basculeur de validation 1.101 ou 01 n'autorise aucune demande, les nouvelles demandes peuvent apparaître de manière totalement asynchrones sans créer de risque d'aléa puisqu'elles ne seront prises en compte qu'en fin de cycle et ce, alors, de manière parfaitement synchronisée. Donc, plus le taux de demande est élevé, plus le risque d'aléa diminue grâce à cette disposition du montage. Ceci améliore encore notablement la sécurité de fonctionnement du dispositif selon l'invention.

**Revendications**

1. Sélecteur de demandes asynchrones dans un système de traitement de l'information comprenant un premier sélecteur temporel (1) pour sélectionner les demandes selon leur instant de présentation, un deuxième sélecteur spatial (3) pour prendre en compte les demandes sélectionnées par le sélecteur temporel (1) et une horloge temporaire (2) délivrant les signaux de synchronisation (S0, S1, ... Sp) desdits premier (1) et deuxième (3) sélecteurs, le dit sélecteur temporel (1) comprenant, un premier moyen d'initialisation (1101; 01) du sélecteur de demandes asynchrones pour le placer dans un état propre à recevoir et retransmettre une première demande, un deuxième moyen d'aiguillage (1102, 1103, 1104; 02 à 06) de la dite demande vers l'entrée d'un dispositif de mémorisation (1108 à 1111; 08 à 17), un troisième moyen (1106; 07) de transmission de la dite demande à l'entrée de la dite horloge temporaire (2), la dite horloge temporaire (2) délivrant un premier et un deuxième signal de commande sur ses sorties (2, 4) décalés dans le temps pour commander la mémorisation de la demande à l'intérieur du dispositif de mémorisation sélectionné et un troisième signal sur sa sortie (3) pour placer le moyen d'initialisation (1101; 01) dans un état propre à interdire toute réception et retransmission de nouvelles demandes asynchrones, caractérisé en ce que le dispositif de

émorisation comprend une première (1108, 1109; 08 à 12) et une deuxième (1110, 1111; 13 à 17) mémoire commandées respectivement par les dits premier et deuxième signaux de commande émis par la dite horloge temporaire (2) de façon qu'une demande mémorisée dans la première mémoire puisse être transférée dans la deuxième mémoire.

2. Sélecteur de demandes asynchrones selon la revendication 1, caractérisé en ce que l'intervalle de temps séparant l'apparition des premier et second signaux de commande de l'horloge temporaire (2) doit être plus grand ou égal au temps obtenu par corrélation avec un temps d'incertitude $t_i$ calculé en effectuant le quotient du carré de temps qui sépare deux initialisations successives du sélecteur de demandes asynchrones par la durée pendant laquelle l'utilisateur admet une probabilité d'un cycle entâché d'aléas.

3. Sélecteur de damandes asynchrones selon la revendication 1, caractérisé en ce que le sélecteur spatial (3) comprend des moyens de lecture du contenu de la dite deuxième mémoire (1110, 1111; 13 à 17) de chacun des dits dispositifs de mémorisation commandés à partir d'un quatrième signal émis sur la sortie (5) de l'horloge temporaire (2) un instant après l'émission du dit deuxième signal de commande du dispositif de mémorisation.

4. Sélecteur de demandes asynchrones selon la revendication 1, caractérisé en ce que le dit premier moyen d'initialisation (1101; 01) est placé dans un état propre à interdire la réception et la retransmission de demandes asynchrones par le dit sélecteur, lorsqu'il est commandé par le troisième signal émis par l'horloge temporaire (2) un instant intermédiaire entre la délivrance des dits premier et deuxième signaux de commande par la dite horloge temporaire (2).

5. Sélecteur de demandes asynchrones selon l'une quelconque des revendication 1, 3 et 4, caractérisé en ce que la dite horloge temporaire (2) est une ligne à retard (1107; 18).

**Patentansprüche**

1. Selektor zur Selektion von asynchronen Aufforderungen in einem Informationsverarbeitungssystem, mit einem ersten, zeitlichen Selektor (1) zur Selektion von Aufforderungen entsprechend ihrem Ankunftszeitpunkt, einem zweiten, räumlichen Selektor (3) zur Berücksichtigung der durch den zeitlichen Selektor (1) ausgewählten Aufforderungen und einem Zeittaktgeber (2), der die Synchronisationssignale (S0, S1, ... Sp) für den ersten (1) und den zweiten (3) Selektor liefert, wobei der genannte zeitliche Selektor (1) enthält: eine erste Einrichtung (1101; 01) zum Initiieren des Selektors für asynchrone Aufforderungen, um diesen in einen Zustand zu versetzen, der geeignet ist, um eine erste Aufforderung zu empfangen und sei weiterzusenden, eine zweite Einrichtung (1102, 1103, 1104; 02 bis 06) zum Umlenken der genannten Aufforderung zum Eingang einer Speichervorrichtung (1108 bis 1111; 08 bis 17), eine dritte Einrichtung (1106; 07) zur Übertragung der genannten Aufforderung zum Eingang des genannten Zeittaktgebers (2); wobei der genannte Zeittaktgeber (2) ein erstes und ein zweites Steuersignal an seinen Ausgängen (2, 4) abgibt, die zeitlich verschoben sind, um die Speicherung der Aufforderung im Inneren der ausgewählten Speichervorrichtung zu steuern, sowie ein drittes Signal an ihrem Ausgang (3) abgibt, um die Initiierungseinrichtung (1101; 01) in einen Zustand zu versetzen, der geeignet ist, um jeglichen Empfang und jegliche Weitersendung von neuen asynchronen Aufforderungen zu unterbinden, dadurch gekennzeichnet, daß die Speichervorrichtung einen ersten (1108, 1109; 08 bis 12) und einen zweiten (1110, 1111; 13 bis 17) Speicher umfaßt, von denen der erste durch das erste und der zweite durch das zweite Steuersignal, die von dem Zeittaktgeber (2) abgegeben werden, gesteuert ist, so daß eine in dem ersten Speicher gespeicherte Aufforderung in den zweiten Speicher überführt werden kann.

2. Selektor für asynchrone Aufforderungen nach Anspruch 1, dadurch gekennzeichnet, daß das Zeitintervall, welches das Erscheinen des ersten von dem des zweiten Steuersignals des Zeittaktgebers (2) trennt, größer als die oder gleich der Zeitspanne ist, die durch Korrelation mit einer Unsicherheitszeit $t_i$ erhalten wird, welche berechnet wird, indem der Quotient aus dem Quadrat der Zeit zwischen zwei aufeinanderfolgenden Initiierungen des Selektors für asynchrone Aufforderungen durch die Dauer, während welcher der Benutzer eine Wahrscheinlichkeit eines mit Zufallsereignissen behafteten Zyklus zuläßt, gebildet wird.

3. Selektor für asynchrone Aufforderungen nach Anspruch 1, dadurch gekennzeichnet, daß der räumliche Selektor (3) Mittel zum Auslesen des Inhalts des zweiten Speichers (1110, 1111; 13 bis 17) jeder der Speichervorrichtungen enthält, welche durch ein viertes Signal gesteuert sind, das am Ausgang (5) des Zeittaktgebers (2) einen Augenblick nach der Aussendung des zweiten Steuersignals der Speichervorrichtung abgegeben wird.

4. Selektor für asynchrone Aufforderungen nach Anspruch 1, dadurch gekennzeichnet, daß die genannte erste bzw. Initiierungseinrichtung (1101; 01) in einen Zustand versetzt wird, der geeignet ist, um den Empfang und die Weitersendung von asynchronen Aufforderungen durch den genannten Selektor zu unterbinden, wenn sie durch das dritte Signal angesteuert wird, welches durch den Zeittaktgeber (2) zu einem Zwischenzeitpunkt zwischen der Abgabe des ersten und des zweiten Steuersignals durch den Zeittaktgeber (2) abgegeben wird.

5. Selektor für asynchrone Aufforderungen nach einem der Ansprüche 1, 3 und 4, dadurch gekennzeichnet, daß der genannte Zeittaktgeber (2) eine Verzögerungsleitung (1107; 18) ist.

## Claims

1. Asynchronous demand selector in a data processing system, comprising a first temporal selector (1) for selection of demands according to their instant of presentation, a second spatial selector (3) for taking into account the demands selected by the the temporal selector (1) and a timing clock (2) supplying signals for synchronisation (S0, S1, ... Sp) of the said first and second selectors (1) and (3), the said temporal selector (1) comprising a first means (1101; 01) of initialising the asynchronous demand selector in order to place the same in an appropriate state to receive and retransmit a first demand, a second means (1102, 1103, 1104; 02 to 06) of switching the said demand to the input of a storage device (1108 to 1111; 08 to 17), a third means (1106; 07) of transmitting the said demand to the input of the said timing clock (2), the said timing clock (2) delivering a first and a second control signal at its outputs (2, 4) shifted in time to control the storing of the demand within the storage device selected and a third signal at its output (3) for placing the initialising means (1101; 01) in an appropriate state for blocking any reception and retransmission of further asynchronous demands, characterised in that the storage device comprises a first memory (1108, 1109; 08 to 12) and a second memory (1110, 1111; 13 to 17) controlled respectively by the said first and second control signals emitted by the said timing clock (2), so that a demand stored in the first memory may be transferred into the said second memory.

2. Asynchronous demand selector according to claim 1, characterised in that the interval separating the appearance of the first and second control signals of the timing clock (2) must be greater than or equal to the time obtained by correlation with an uncertainty period $t_i$ calculated by establishing the quotient between the square of the time separating two successive initialisations of the asynchronous demand selector and the period during which the user admits a probability of a cycle beset by risks.

3. Asynchronous demand selector according to claim 1, characterised in that the spatial selector (3) comprises means of reading the contents of the said second memory (1110, 1111; 13 to 17) of each of the said storage devices controlled on the basis of a fourth signal emitted at the output (5) of the timing clock (2) an instant after the emission of the said second actuating signal of the storage device.

4. Asynchronous demand selector according to claim 1, characterised in that the said first initialisation means (1101; 01) are placed in an appropriate state for blocking the reception and the retransmission of asynchronous demands by the said selector, when it is actuated by the third signal emitted by the timing clock (2) at an intermediate instant between the delivery of the said first and second control signals by the said timing clock (2).

5. Asynchronous demand selector according to any one of claims 1, 3 and 4, characterised in that the said timing clock (2) is a delay line (1107; 18).

Fig.1

Fig. 2

Fig. 3

0 025 731

Fig. 4

Fig. 5

17